# FASCICULE DE BREVET EUROPEEN

(11) **EP 1 382 802 B1**
(45) Date de publication et mention de la délivrance du brevet: **03.12.2008**
(21) Numéro de dépôt: 03291735.3
(22) Date de dépôt: 11.07.2003
(51) Int. Cl.: F01D 15/10, H02K 7/18, F02C 7/32, F02C 7/268

(54) **Démarreur-générateur intégré pour turbomachine**
Integrierter Startgenerator für eine Turbomaschine
Integrated start generator for a turbomachine

(30) Priorité: 17.07.2002 FR 0209029
(43) Date de publication de la demande: 21.01.2004
(73) Titulaire: SNECMA, 75015 Paris (FR)
(72) Inventeur: Franchet, Michel, 77240 Pouilly-Le-Fort (FR); Picard, Jean-Louis, 77000 Vaux-Le-Penil (FR)
(74) Mandataire: Cardy, Sophie Marie

(56) Documents cités:
- DE-A- 1 803 419
- FR-A- 2 076 450
- GB-A- 629 775
- GB-A- 1 147 730
- US-A- 3 264 482
- US-A- 5 376 827

## Description

L'invention concerne une turbomachine d'aviation et plus particulièrement une turbomachine comportant un générateur de courant électrique intégré coaxial à l'axe de la turbomachine.

Dans un moteur conventionnel, le boîtier d'accessoires équipé de pompes à carburant, de pompes de lubrification des paliers, de pompes hydrauliques pour la commande de divers organes, de générateurs électriques et du démarreur, est placé à l'extérieur du moteur et reçoit la puissance extraite du moteur au moyen d'un arbre vertical et de renvois d'angles.

Au fil du temps, l'augmentation des taux de compression et des températures d'entrée dans la turbine, ainsi que l'amélioration des matériaux et du rendement, ont constamment réduit la taille des moteurs pour obtenir un rapport poussée/poids toujours plus important, que ce soit pour les applications civiles ou les applications militaires.

Proportionnellement, la chaîne de prélèvement de puissance et le boîtier d'accessoires n'ont suivi qu'avec difficulté cette évolution et représentent encore une part importante du volume et de la masse des moteurs, notamment lorsque ces derniers sont de faible poussée, donc de petite taille, surtout quand ce carter d'accessoires, généralement placé sous ou sur le moteur, parfois latéralement à celui-ci, supporte un démarreur à air et un générateur électrique séparés.

L'utilisation de petits moteurs, toujours plus simples et de coût réduit, pour propulser des avions d'entraînement, des drones d'observation ou d'attaque et des missiles de croisière, oblige en plus les motoristes à privilégier la furtivité de ces moteurs. Celle-ci peut être envisagée par une forte réduction de leur surface frontale, ce qui procure en outre un gain de traînée significatif permettant d'augmenter l'autonomie ou la portée des aéronefs ou engins téléguidés équipés de ces moteurs. Il paraît donc souhaitable, de façon à réduire la masse et la surface frontale des moteurs, d'envisager l'intégration d'un générateur-démarreur électrique dans le moteur et de supprimer l'emploi des liaisons mécaniques pour que l'interface entre le moteur et les accessoires deviennent alors une transmission électrique.

Sur les avions gros porteurs, à commandes de vol électriques ou électrohydrauliques toujours plus nombreuses, ainsi que sur les avions radar, d'alerte avancée et de surveillance électronique, les besoins en énergie électrique sont importants. Les moteurs de ces avions sont équipés de générateurs d'appoint ou auxiliaires, ce qui augmente la taille des boîtiers, ainsi que leur masse pour les supporter. Il est donc intéressant d'intégrer un générateur auxiliaire, en plus du générateur-démarreur dans le moteur, dans un moteur à haut taux de dilution, afin de réduire la taille et la masse des renvois d'angles, voire de les supprimer, et d'amincir la nacelle, en logeant certains accessoires à entraînement électrique dans le pylône.

L'état de la technique est illustré notamment par US 3 859 785, US 5 867 979, US 3 264 482 et GB 1 147 730.

US 3 859 785 concerne une turbomachine monocorps, dans laquelle une cloche munie d'aimants permanents forme le rotor d'un générateur et sert d'écrou au palier avant de l'arbre du compresseur. Cette cloche est disposée dans le cône d'entrée d'air du compresseur. Cette solution présente l'inconvénient de limiter en taille le générateur de courant par suite des faibles diamètres de l'arbre et du cône d'entrée. Ce compresseur doit tourner à de grandes vitesses pour délivrer une puissance importante dans un encombrement aussi réduit.

US 5 867 979 concerne une turbomachine à haut taux de dilution qui comporte trois corps. Ce document montre à la figure 1, un générateur de courant principal disposé coaxialement dans le cône arrière de la turbine à basse pression, c'est-à-dire dans une zone chaude, et des générateurs auxiliaires disposés dans le carter moteur et entraînés par des renvois d'angle et des arbres transversaux, ces générateurs auxiliaires recevant de la puissance respectivement de l'arbre à haute pression et de l'arbre du corps intermédiaire. Ce document décrit un deuxième mode de réalisation, illustré par les figures 2 et 3, dans lequel les paliers avant et arrière des arbres sont de type électromagnétiques et intègrent des générateurs électriques. Du fait que ces générateurs sont intégrés sur les arbres, leur dimensionnement est réduit et ils doivent tourner à une grande vitesse pour délivrer une puissance importante dans un encombrement aussi réduit. En outre, les générateurs intégrés sur les paliers arrières sont disposés dans des zones chaudes.

US 3 264 482 montre une turbomachine double corps double flux qui comporte un générateur démarreur interposé entre un disque fixe et le palier de support du rotor de compresseur sur l'arbre d'entraînement de la soufflante.

L'inducteur est monté à la périphérie d'un disque de rotor entourant un manchon prévu à l'avant du rotor de compresseur, et le support par le palier inter-arbres, et l'induit est monté à l'intérieur du carter du moteur. Le disque de rotor du générateur démarreur est volumineux et entraîne une augmentation notable de la masse.

GB 1 147 730 représente l'état de la technique le plus proche de l'invention, car il montre à la figure 3 un démarreur électrique dont l'inducteur est monté dans l'alésage d'un disque aubagé 32 d'un rotor de compresseur et entoure l'induit solidaire du stator du compresseur, sans augmentation de masse excessive, ce démarreur pouvant également être utilisé en tant que générateur d'électricité.

Partant de cet état de la technique, le but de l'invention est de proposer une turbomachine ayant au moins un générateur de courant électrique intégré qui puisse produire une puissance importante à faible vitesse.

Ce but est atteint par l'invention en intégrant le générateur dans une zone froide ayant un diamètre nettement plus grand que celui d'un arbre ou d'un palier d'arbre de ladite turbomachine, et dans une zone permettant d'assurer une plus grande étendue axiale de l'entrefer.

L'invention concerne donc une turbomachine comportant une chambre de combustion et un corps haute pression, ledit corps présentant, en amont de ladite chambre, un compresseur axial d'axe X destiné à délivrer de l'air à ladite chambre et, en aval de ladite chambre, une turbine recevant des gaz chauds de ladite chambre et destinée à entraîner en rotation le rotor dudit compresseur, ledit compresseur comportant une pluralité d'étages de compression, chaque étage présentant une couronne d'aubes fixes solidaires d'un carter et une couronne d'aubes mobiles qui s'étendent radialement à la périphérie d'un disque dudit rotor, ladite turbomachine comportant en outre un générateur de courant électrique coaxial audit corps et dont l'inducteur est solidaire en rotation dudit rotor et entoure l'induit solidaire dudit carter, ledit générateur étant configuré pour fonctionner en tant que démarreur de ladite turbomachine.

Cette turbomachine est caractérisée par le fait que ledit inducteur est monté dans l'alésage des disques de deux étages consécutifs du compresseur.

Ainsi, l'étendue axiale de l'entrefer est augmentée.

Cette solution s'applique pour les turbomachines monocorps et pour les turbomachines à double ou triple corps.

Lorsqu'il s'agit d'une turbomachine à simple corps avec carter d'entrée, le générateur est intégré en amont du compresseur, c'est-à-dire dans l'alésage du disque le plus proche du carter d'entrée support d'induit, au 1^{er} étage, avantageusement d'un disque aubagé monobloc.

Lorsqu'il s'agit d'une turbomachine simple corps sans carter d'entrée, le générateur est intégré en aval du compresseur, c'est-à-dire dans l'alésage des disques les plus proches du carter intermédiaire support d'induit.

Lorsqu'il s'agit d'une turbomachine à double ou triple corps, le générateur est toujours intégré en amont du compresseur haute pression, c'est-à-dire dans l'alésage des disques, les plus proches du carter intermédiaire, avantageusement des disques ou des anneaux aubagés monoblocs.

Lorsqu'il s'agit d'une turbomachine à double corps qui comporte en outre un corps basse pression ayant un compresseur basse pression disposé en amont du corps haute pression, et une turbine basse pression disposée en aval du corps haute pression et destinée à entraîner en rotation le rotor dudit compresseur basse pression, ledit compresseur comportant une pluralité d'étages de compression présentant chacun une couronne d'aubes fixes et une couronne d'aubes mobiles qui s'étendent radialement à la périphérie d'un disque dudit rotor, il est en outre avantageux d'équiper cette turbomachine d'un générateur auxiliaire de courant dont l'inducteur est monté dans l'alésage d'au moins un disque du compresseur basse pression.

Les dispositions de l'invention permettent d'envisager une turbomachine d'aviation dans laquelle les accessoires sont entraînés par des moteurs électriques alimentés par les générateurs de courant selon l'invention, et donc de supprimer les liaisons mécaniques et les renvois d'angles, d'alléger le moteur et d'amincir la nacelle dans le cas d'un turboréacteur à haut taux de dilution.

Il est très intéressant également de minimiser la masse du carter d'accessoires sur les gros moteurs car cela permet de réduire les charges verticales en cas de fort balourd lors de la perte d'aube de soufflante et d'obtenir un carter intermédiaire allégé.

D'autres caractéristiques et avantages de l'invention ressortiront à la lecture de la description suivante faite à titre d'exemple et en référence aux dessins annexés dans lesquels:
- la figure 1 est une demi-coupe schématique de l'avant d'une turbomachine monocorps avec carter d'entrée qui montre la disposition d'un générateur-démarreur intégré selon l'invention ;
- la figure 2 est semblable à la figure 1 et montre la disposition du générateur-démarreur selon l'invention sur une turbomachine monocorps sans carter d'entrée ;
- la figure 3 est une demi-coupe schématique d'une turbomachine double corps, double flux, dont le compresseur haute pression est équipé d'un générateur-démarreur selon l'invention, et dont le compresseur basse pression est équipé d'un générateur auxiliaire selon l'invention ;
- la figure 4 est une coupe selon un plan perpendiculaire à l'axe du moteur d'un générateur de courant selon l'invention ;
- la figure 5 montre un exemple de la disposition des accessoires dans un turboréacteur "tout électrique" ; et
- la figure 6 est une coupe schématique d'un compresseur basse pression équipé d'un générateur auxiliaire.

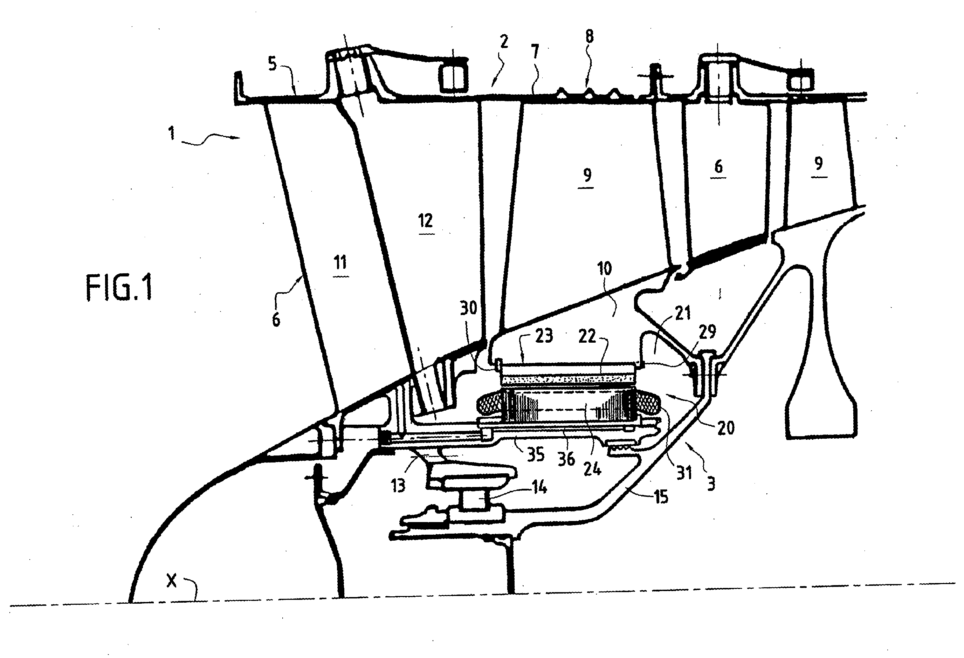

La figure 1 montre la partie avant d'une turbomachine monocorps 1 avec carter d'entrée qui comporte, à l'avant de la chambre de combustion non montrée sur le dessin, un compresseur axial 2 d'axe X, dont le rotor 3 est entraîné par le rotor d'une turbine qui transforme une partie de l'énergie des gaz chauds issus de la chambre de combustion en travail de compression de l'air qui pénètre dans le compresseur 2 par l'avant, cet air comprimé étant délivré dans la chambre de combustion où du carburant est injecté et brûlé. L'autre partie de l'énergie des gaz issus de la chambre de combustion sert à la propulsion de l'aéronef équipé de ladite turbomachine.

Le compresseur comporte plusieurs étages de compression. Chaque étage comporte une couronne 5 d'aubes fixes 6 qui s'étendent radialement vers l'intérieur à partir du carter extérieur 7 du moteur, et une couronne 8 d'aubes mobiles 9, disposée en aval de la couronne 5 d'aubes fixes 6, et qui s'étendent radialement vers l'extérieur à partir de la périphérie d'un disque 10 formant un élément constitutif du rotor 3.

Le premier étage du compresseur 2 montré sur la figure 1, comporte des aubes fixes 6 constituées à l'avant par des bras structuraux 11 et constituées à l'arrière par des ailes pivotantes 12 dont l'angle est ajusté en fonction de la vitesse de rotation du rotor 3, afin d'améliorer le rendement de la turbomachine. Les bras structuraux 11 s'étendent radialement vers l'extérieur à partir d'une structure de support 13 du palier avant 14 du compresseur 2. Les aubes mobiles 9 du premier étage sont du type à grande corde, et le disque correspondant 10 a une grande dimension axiale. Ce disque 10 est relié à une virole 15 à l'extrémité avant de laquelle est monté le palier avant 14.

Selon l'invention, un générateur-démarreur 20, d'axe X est monté dans l'espace annulaire 21 délimité par la virole 15, la structure de support 13 du palier 14 et le disque 10 du premier étage.

L'inducteur 22 de ce générateur-démarreur 20 est monté dans l'alésage intérieur 23 du disque 10 et entoure l'induit 24 qui est monté sur une virole cylindrique 35 solidaire de la structure de support 13 du palier 14.

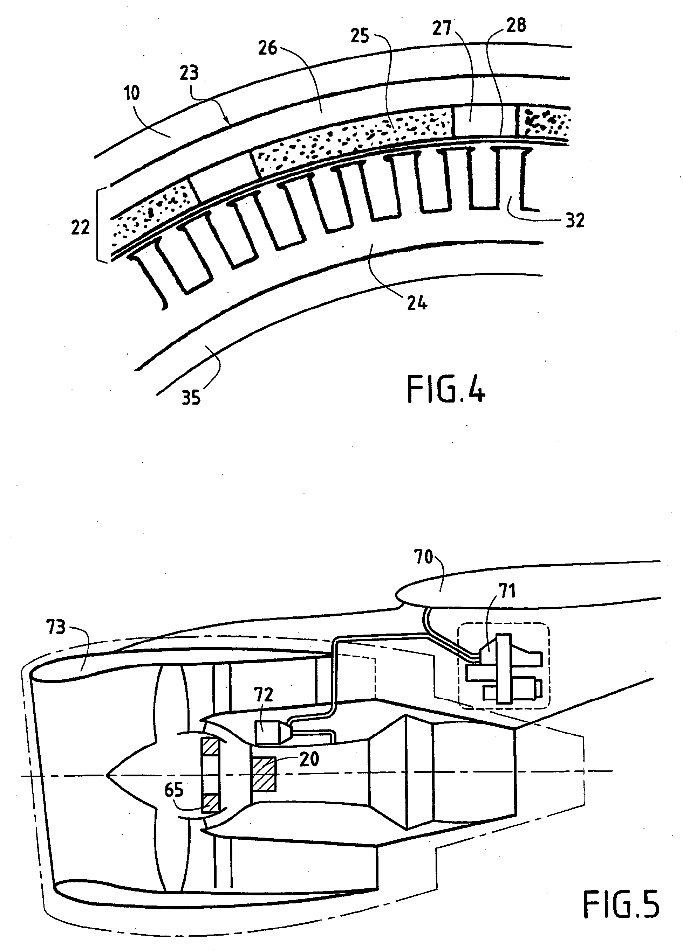

Ainsi que cela est montré sur la figure 4, les pôles de l'inducteur 22 sont constitués d'aimants 25 aux terres rares, Samarium-Cobalt par exemple, dont les caractéristiques ne chutent que faiblement jusqu'à une température de 300°C, et qui servent de source permanente de champ magnétique. Ces aimants 25 sont répartis de façon régulière sur la face interne d'un manchon cylindrique 26 en matériau magnétique à haute résistance, du maraging par exemple, pour former l'inducteur du générateur-démarreur 20. Ces aimants permanents 25, de forte énergie, sont peu susceptibles de démagnétisation et ne génèrent pas de courants de Foucault. Ils n'ont pas besoin d'un refroidissement forcé dans l'environnement avant du compresseur 2. Des blocs 27 en résine ou en aluminium sont collés entre les aimants 25 pour combler le vide des espaces interpolaires et assurer la cohésion de l'inducteur 22. Une entretoise 28 de faible épaisseur en matériau amagnétique, collée et frettée, assure le maintien des aimants permanents 25 dans le manchon cylindrique 26 et protège les parties actives de l'inducteur 22 au niveau de l'entrefer du générateur-démarreur 20.

Le manchon cylindrique 26, complètement équipé, est placé dans l'alésage 23 du disque 10 du premier étage du compresseur 2. Il est bloqué en rotation par des dents ou cannelures 29 et retenu axialement par un anneau flexible 30 monté dans une gorge ménagée dans le disque 10, ainsi que cela est montré sur la figure 1. Le manchon cylindrique 26 joue le rôle de frette et permet d'assurer une interface propre au montage et au démontage de l'inducteur 22 dans l'alésage 23 du disque 10.

L'épaisseur du manchon cylindrique 26, nécessaire pour refermer le flux magnétique, doit être suffisante pour reprendre seule les efforts centrifuges développés par les aimants permanents 25 et l'entretoise amagnétique 28 lors de la rotation du rotor 3. Le manchon cylindrique 26 assure ainsi les fonctions mécaniques et magnétiques. Le disque 10, dans lequel le manchon 26 est monté, permet cependant de répartir les contraintes tangentielles dans l'inducteur 22 et de réduire l'allongement radial provoqué par ces contraintes, pour maintenir un entrefer magnétique réduit et constant.

Le disque 10 du compresseur 2 est donc dimensionné pour résister aux forces aérodynamiques et centrifuges des aubes mobiles 9 mais également à celles dues à la présence de l'inducteur 22 dans son alésage 23.

Le circuit magnétique de l'induit 24 est constitué de façon classique par des empilages de tôles en fer-silicium de très faible épaisseur pour limiter la circulation des courants de Foucault et par des bobinages 31 enroulés autour des pôles d'induit 32 ainsi créés.

L'induit 24 est monté autour de la virole cylindrique 35 qui s'étend axialement vers l'arrière à partir de la structure de support 13 du palier 14. La virole cylindrique 35 a un diamètre supérieur au diamètre de la bague extérieure du palier 14. Cette disposition facilite la maintenance et la dépose de l'induit 24. La structure 13 et la virole cylindrique 35 peuvent être munies de canaux et d'évidements 36 qui servent à la circulation d'un fluide de refroidissement capable d'évacuer les calories produites, selon des techniques bien connues dans le domaine de l'art.

L'énergie électrique délivrée par le générateur 20 étant alternative et à une fréquence élevée et variable, proportionnelle au régime du moteur, la totalité ou une partie de cette énergie est redressée. L'autre partie peut être utilisée directement sans interface électronique avec le réseau de l'engin ou aéronef équipé de la turbomachine selon l'invention. Le générateur 20 fournit l'énergie électrique à l'ensemble du réseau de bord, aéronef et moteur.

Corrélativement, tout usage de balai, sur collecteur ou bague, est supprimé, ce qui ne peut qu'améliorer la fiabilité et la maintenance. Des fusibles légers et fiables, situés à l'extérieur du moteur, peuvent limiter la puissance électrique générée en cas de court-circuit des enroulements 31, provoqués par les aimants permanents 25, afin d'éviter la destruction du système électrique.

Il est admis que le traitement de la tension et de la fréquence est reporté à l'extérieur du moteur dans des boîtiers électroniques.

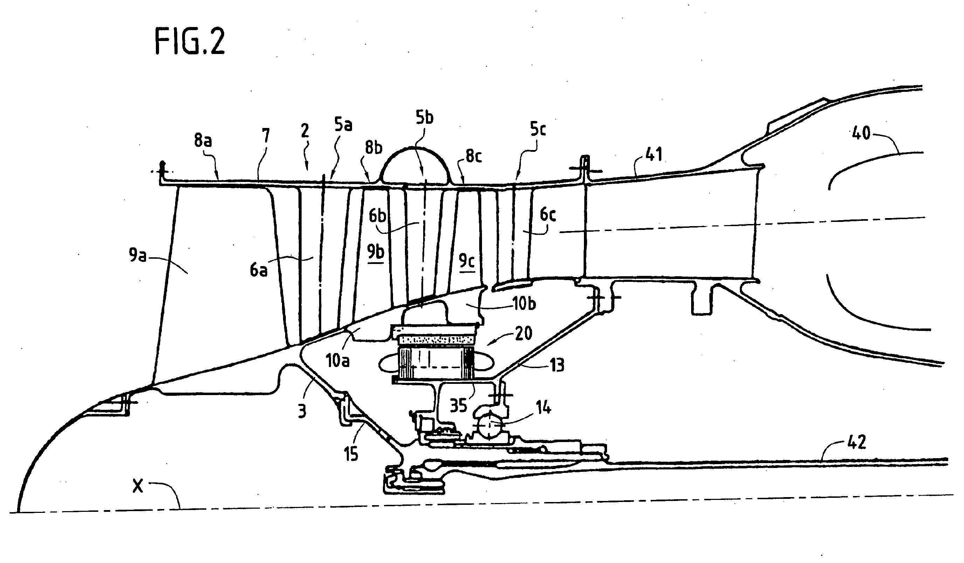

La figure 2 montre un autre type de turbomachine monocorps sans carter d'entrée dans lequel le compresseur 2 est séparé de la chambre de combustion 40 par un carter intermédiaire 41. Ce carter intermédiaire est prolongé vers l'avant par le carter extérieur 7 du compresseur 2 à partir duquel s'étendent radialement vers l'intérieur trois couronnes 5a, 5b, 5c d'aubes fixes référencées 6a, 6b, 6c. Le rotor 3 du compresseur 2 comporte trois couronnes 8a, 8b, 8c d'aubes mobiles 9a, 9b, 9c. Dans ce mode de réalisation, la couronne d'aubes mobiles de chaque étage est disposée en amont de la couronne d'aubes fixes du même étage.

Le rotor 3 est relié à la turbine disposée en aval de la chambre de combustion 40 par un arbre 42 d'axe X relié au rotor 3, en aval de la première couronne 8a d'aubes mobiles 9a, par une virole conique 15. L'extrémité avant de l'arbre 42 est supportée par un palier 14, lui-même supporté par une structure de support 13, également conique reliée au carter intermédiaire 41. Les aubes mobiles 9a du premier étage sont du type à grande corde, tandis que les aubes mobiles 9b et 9c ont une dimension axiale beaucoup plus faible et sont montées à la périphérie de deux disques adjacents 10a, 10b disposés dans l'espace annulaire 21 délimité par la virole 15 et le rotor 3.

Un générateur-démarreur 20, semblable à celui décrit en référence aux figures 1 et 4, comporte un inducteur 22 disposé dans des alésages internes des deux disques adjacents 10a et 10b, et un induit 24 monté autour d'une virole cylindrique 35 solidaire de la structure de support 13 du palier 14.

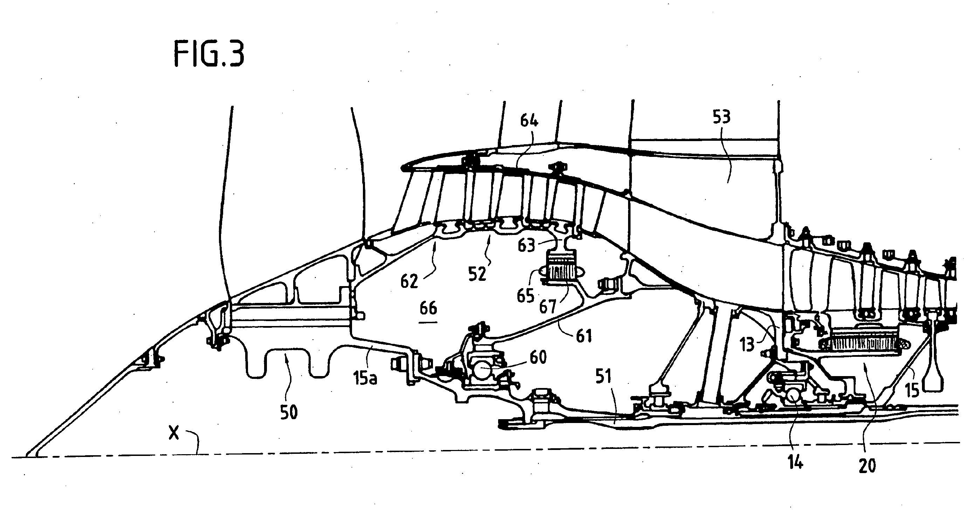

La figure 3 montre la partie avant d'un turboréacteur double corps double flux qui comporte de l'avant vers l'arrière une soufflante 50 entraînée par un arbre 51 à basse pression d'axe X, un compresseur à basse pression 52 entraîné par le même arbre basse pression 51, un carter intermédiaire 53, et un compresseur 2 haute pression entraîné par un arbre à haute pression. Un palier 14 est interposé entre une structure de support 13 reliée au carter intermédiaire 53 et l'extrémité avant de l'arbre haute pression.

Un générateur-démarreur 20 d'axe X est intégré dans l'espace annulaire 21 délimité par la structure de support 13, le rotor du compresseur haute pression 2 et une virole 15 solidaire de l'arbre haute pression.

Ce générateur-démarreur est semblable à celui décrit ci-dessus et ne nécessite pas d'autres explications.

L'extrémité avant de l'arbre basse pression 51 est reliée à la roue de la soufflante 50 par une virole conique 15a et est supportée par un palier avant 60 lui-même supporté par une structure conique 61 reliée au carter intermédiaire 53. Le rotor 62 du compresseur basse pression 52 est relié à la roue de la soufflante 50 et est constitué par une pluralité de disques 63 à la périphérie desquels s'étendent des couronnes d'aubes mobiles intercalées entre des couronnes d'aubes fixes solidaires d'un carter avant 64.

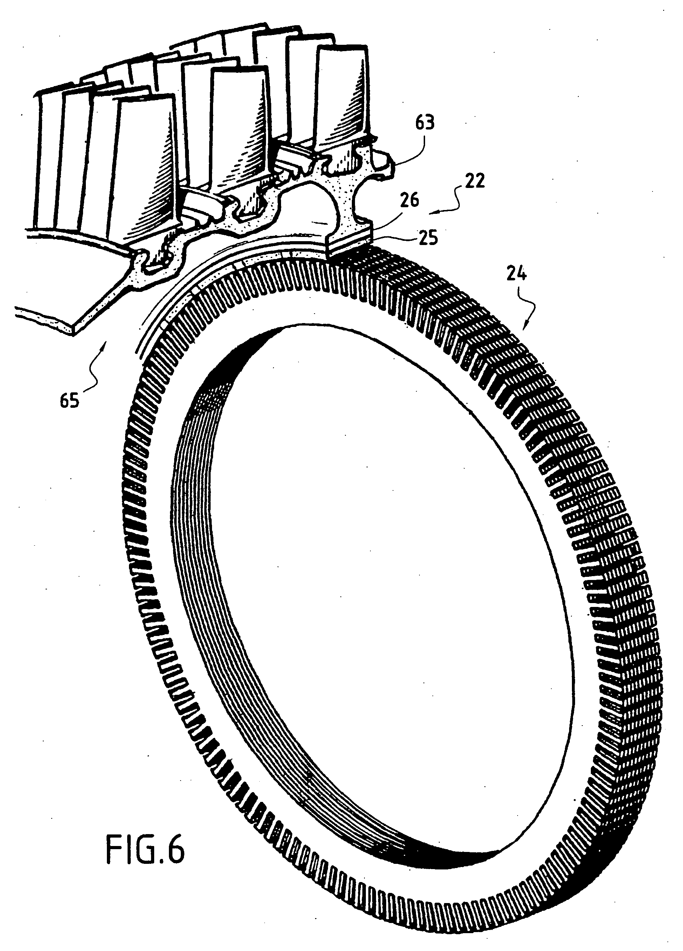

Selon l'invention, un générateur auxiliaire 65 ou d'appoint, d'axe X est intégré dans l'espace annulaire 66 délimité par la virole 15a, le rotor 62 et la structure conique 61. Ce générateur auxiliaire 65, montré en détail sur la figure 6, a une structure semblable à celle du générateur-démarreur 20 décrit plus haut. Son inducteur 22 est monté dans l'alésage d'un disque 63 du compresseur à basse pression 52, et son induit 24 est monté autour d'une virole cylindrique 67 solidaire de la structure conique 61.

La figure 5 montre le turboréacteur à double flux double corps décrit ci-dessus monté sous l'aile 70 d'un avion. La pompe à carburant basse pression 71 est disposée dans le pylône, et la pompe à carburant haute pression 72 est installée dans le carter du moteur. Ces deux pompes 71 et 72 sont entraînées par des moteurs électriques alimentés par le générateur-démarreur 20 et éventuellement par le générateur auxiliaire 65. Ce turboréacteur "tout électrique" ne comporte plus les dispositifs de renvoi ni un boîtier d'accessoires disposé dans la nacelle 73. On remarque sur cette figure 5, l'amincissement de la nouvelle nacelle 73 montée en traits pleins par rapport à la nacelle d'un turboréacteur traditionnel, montrée en traits pointillés.

Il est à noter que l'adjonction d'un générateur-démarreur 20 ou d'un générateur auxiliaire 65 dans le moteur, ne nécessite pas l'adjonction de paliers supplémentaires pour supporter les inducteurs et les induits.

Le fait que l'induit est disposé à l'intérieur de l'inducteur, on obtient un couple plus important en fonction démarreur pour un même encombrement. En fonction générateur, le débit de courant est plus important, pour un même encombrement et un même régime car la vitesse périphérique des aimants permanents et le nombre de pôles magnétiques sont plus grands.

Enfin, la technologie à aimants permanents peut être remplacée par la technologie à réluctance variable qui combine un rotor fiable, sans bobinage ni aimants mais un simple inducteur denté qui forme les poles, avec une forte puissance massique et une bonne tolérance à haute température.

## Revendications

1. Turbomachine comportant une chambre de combustion et un corps haute pression, ledit corps présentant, en amont de ladite chambre, un compresseur axial (2) d'axe X destiné à délivrer de l'air à ladite chambre et, en aval de ladite chambre, une turbine recevant des gaz chauds de ladite chambre et destinée à entraîner en rotation le rotor (3) dudit compresseur (2), ledit compresseur comportant une pluralité d'étages de compression, chaque étage présentant une couronne d'aubes fixes solidaires d'un carter et une couronne d'aubes mobiles qui s'étendent radialement à la périphérie d'un disque dudit rotor, ladite turbomachine comportant en outre un générateur de courant électrique (20) coaxial audit corps et dont l'inducteur (22) est solidaire en rotation dudit rotor et entoure l'induit solidaire dudit carter, ledit générateur étant configuré pour fonctionner en tant que démarreur de ladite turbomachine.
**caractérisée par le fait que** ledit inducteur (22) est monté dans l'alésage des disques (10a, 10b) de deux étages consécutifs du compresseur.

2. Turbomachine selon la revendication 1, comportant en outre un corps basse pression ayant un compresseur basse pression (52) disposé en amont du corps haute pression, et une turbine basse pression disposée en aval du corps haute pression et destinée à entraîner en rotation le rotor (62) dudit compresseur basse pression, ledit compresseur comportant une pluralité d'étages de compression présentant chacun une couronne d'aubes fixes et une couronne d'aubes mobiles qui s'étendent radialement à la périphérie d'un disque (63) dudit rotor,
**caractérisée par le fait qu'**elle comporte en outre un générateur auxiliaire (65) de courant dont l'inducteur (22) est monté dans l'alésage intérieur d'au moins un disque (63) du compresseur à basse pression.

3. Turbomachine selon l'une quelconque des revendications 1 ou 2, **caractérisée par le fait que** l'induit est monté autour d'une virole cylindrique (35, 67) prévue sur la structure de support (13, 61) d'un palier (14, 60) du compresseur correspondant.

4. Turbomachine selon la revendication 3, **caractérisée par le fait que** la virole cylindrique (35, 67) a un diamètre supérieur au diamètre de la bague extérieure du palier (14, 60).

## Claims

1. A turbomachine comprising a combustion chamber and a high pressure body, said body presenting upstream from said chamber an axial compressor (2) of axis X for delivering air to said chamber and downstream from said chamber, a turbine receiving hot gases from said chamber for rotating the rotor (3) of said compressor (2), said compressor having a plurality of compression stages, each stage presenting a ring of stationary blades secured to a casing and a ring of moving blades radially extending to the periphery of a disk of said rotor, said turbomachine further comprising an electricity generator (20) coaxial with said body and the field magnetic circuit (22) of which rotates together with said rotor and surrounds the secondary circuit secured to said casing, said generator being configured to operate as a starter of said turbomachine,
**characterized by** the fact that said field magnetic circuit (22) is mounted in the bore of the disks (10a, 10b) of two consecutive stages of the compressor.

2. A turbomachine according to claim 1, further comprising a low pressure body having a low pressure compressor (52) arranged upstream from the high pressure body, and a low pressure turbine arranged downstream from the high pressure body for rotating the rotor (62) of said low pressure compressor, said compressor comprising a plurality of compression stages, each presenting a ring of stationary blades and a ring of moving blades radially extending to the periphery of a disk (63) of said rotor,
**characterized by** the fact that it further comprises an auxiliary electricity generator (65), the secondary magnetic circuit (22) of which is mounted in the interior bore of at least one disk (63) of the low pressure compressor.

3. A turbomachine according to any one of claim 1 or 2, **characterized by** the fact that the secondary magnetic circuit is mounted around a cylindrical shroud (35, 67) provided on the support structure (13, 61) of a bearing (14, 60) of the corresponding compressor.

4. A turbomachine according to claim 3, **characterized by** the fact that the cylindrical shroud (35, 67) is of a diameter greater than the diameter of the outer ring of the bearing (14, 60).

## Patentansprüche

1. Turbomaschine, die eine Brennkammer und einen Hochdruckkörper aufweist, wobei der Körper stromaufwärts der Kammer einen Axialverdichter (2) mit der Achse X, der dazu bestimmt ist, der Kammer Luft zu liefern, sowie stromabwärts der Kammer eine Turbine aufweist, welche heiße Gase aus der Kammer aufnimmt und dazu bestimmt ist, den Rotor (3) des Verdichters (2) drehanzutreiben, wobei der Verdichter eine Vielzahl von Verdichtungsstufen aufweist, wobei jede Stufe einen Kranz von Leitschaufeln umfaßt, die mit einem Gehäuse fest verbunden sind, sowie einen Kranz von Laufschaufeln, die sich radial am Umfang einer Scheibe des Rotors erstrecken, wobei die Turbomaschine ferner einen Stromgenerator (20) umfaßt, der zu dem Körper koaxial ist und dessen Ständer (22) mit dem Rotor drehfest ist und den mit dem Gehäuse fest verbundenen Läufer umgibt, wobei der Generator ausgebildet ist, um als Starter der Turbomaschine zu funktionieren,
**dadurch gekennzeichnet, daß** der Ständer (22) in der Bohrung der Scheiben (10a, 10b) von zwei aufeinanderfolgenden Stufen des Verdichters angebracht ist.

2. Turbomaschine nach Anspruch 1, die ferner einen Niederdruckkörper aufweist, welcher einen stromaufwärts des Hochdruckköpers angeordneten Niederdruckverdichter (52) sowie eine stromabwärts des Hochdruckkörpers angeordnete Niederdruckturbine umfaßt, die dazu bestimmt ist, den Rotor (62) des Niederdruckverdichters drehanzutreiben, wobei der Verdichter eine Vielzahl von Verdichtungsstufen umfaßt, die jeweils einen Kranz von Leitschaufeln und einen Kranz von Laufschaufeln, die sich radial am Umfang einer Scheibe (63) des Rotors erstrecken, aufweisen,
**dadurch gekennzeichnet, daß** sie außerdem einen Hilfsstromgenerator (65) aufweist, dessen Ständer (22) in der Innenbohrung wenigstens einer Scheibe (63) des Niederdruckverdichters angebracht ist.

3. Turbomaschine nach einem der Ansprüche 1 oder 2, **dadurch gekennzeichnet, daß** der Läufer um einen zylindrischen Ring (35, 67) herum angeordnet ist, der an der Tragstruktur (13, 61) eines Lagers (14, 60) des entsprechenden Verdichters vorgesehen ist.

4. Turbomaschine nach Anspruch 3, **dadurch gekennzeichnet, daß** der Durchmesser des zylindrischen Rings (35, 67) größer als der Durchmesser des Außenrings des Lagers (14, 60) ist.
